(19)

**Europäisches Patentamt**
**European Patent Office**
**Office européen des brevets**

(11) **EP 4 145 318 B1**

(12) **EUROPEAN PATENT SPECIFICATION**

(45) Date of publication and mention
of the grant of the patent:
**02.07.2025 Bulletin 2025/27**

(21) Application number: **22189845.5**

(22) Date of filing: **11.08.2022**

(51) International Patent Classification (IPC):
*G06F 21/55* (2013.01)    *G06F 21/54* (2013.01)
*H04L 9/40* (2022.01)    *G06F 21/57* (2013.01)

(52) Cooperative Patent Classification (CPC):
**G06F 21/554; G06F 21/54; G06F 21/57;**
**H04L 63/14**

(54) **SYSTEM AND METHOD FOR MONITORING DELIVERY OF MESSAGES PASSED BETWEEN PROCESSES FROM DIFFERENT OPERATING SYSTEMS**

SYSTEM UND VERFAHREN ZUR ÜBERWACHUNG DER ZUSTELLUNG VON ZWISCHEN PROZESSEN VON VERSCHIEDENEN BETRIEBSSYSTEMEN ÜBERMITTELTEN NACHRICHTEN

SYSTÈME ET PROCÉDÉ DE SURVEILLANCE DE LA LIVRAISON DE MESSAGES TRANSMIS ENTRE DES PROCESSUS PROVENANT DE DIFFÉRENTS SYSTÈMES D'EXPLOITATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.09.2021 RU 2021126158**
**08.06.2022 US 202217835034**

(43) Date of publication of application:
**08.03.2023 Bulletin 2023/10**

(73) Proprietor: **AO Kaspersky Lab**
**Moscow 125212 (RU)**

(72) Inventors:
• **PINCHUK, Stanislav V.**
**Moscow 125212 (RU)**
• **SIMANOVSKY, Andrey Y.**
**Moscow 125212 (RU)**

• **ROGACHEV, Sergey V.**
**Moscow 125212 (RU)**

(74) Representative: **Chimini, Francesco**
**Jacobacci & Partners S.p.A.**
**Piazza della Vittoria 11**
**25122 Brescia (IT)**

(56) References cited:
**EP-A1- 2 051 179    US-A1- 2008 148 300**
**US-A1- 2017 005 983**

• **HABEEB RICHARD: "Improving the Security of Building Automation Systems Through an seL4-based Communication Frame", 31 March 2018 (2018-03-31), XP055967100, Retrieved from the Internet <URL:https://digitalcommons.usf.edu/cgi/viewcontent.cgi?article=8358&context=etd> [retrieved on 20221003]**

## Description

### FIELD OF TECHNOLOGY

The present disclosure relates to the field of information security, e.g., by monitoring messages passed between processes.

### BACKGROUND

Modem operating systems (hereafter OS) are complex information systems with a large set of installed software for performing a wide variety of functions. At the same time, software developers are constantly working to correct bugs and expand the functionality of the software. However, this quantity and range of software carries significant information security risks due to vulnerabilities in the software and also the possibility of unauthorized installation of malicious software. The first layer of protection against these threats is the features of the OS architecture as well as the built-in security tools of the OS, since it is the OS that provides the mechanisms for processing and monitoring inter-process communication, which can be implemented, inter alia, by exchanging messages between processes.

Many popular operating systems (for example, Windows 9x, Linux, Android, etc.) use a monolithic kernel, which has a number of advantages, for example, performance and the simplicity of communication between drivers. However, due to the large number of kernel software modules and, as a result, the high probability of errors in the code, it is difficult to ensure the reliability and security of a monolithic OS. Thus, if a vulnerability exists in the OS, delivery of certain unwanted or malicious messages may be allowed between processes by the means for inter-process communication processing and control. An example of such a malicious message between processes is a message requesting access to a protected area of memory. Another type of OS kernel is a microkernel (for example, the KasperskyOS, Symbian, etc. kernels), which provides a minimum set of elementary process control and abstraction functions for working with the hardware. The microkernel architecture of the OS is characterized by the small size of the microkernel and the trusted computing platform. This contributes to a higher level of reliability and security of the OS's microkernel architecture, since it is easier to verify the correctness of a small amount of microkernel code. However, this type of OS architecture typically has lower performance. There are also operating systems with hybrid kernels (such as MacOS X, Windows NT, etc.), which allow the operating system to take advantage of the well-structured microkernel architecture of the OS while maintaining the performance of the monolithic kernel.

A current function of operating systems is to ensure the reliability and security of inter-process communications implemented by exchanging messages between processes. An even more challenging task is that of securing inter-process communications between the first and second processes, where the second process is executed in an environment that is hardware- or software-isolated from the first execution environment in which the first process is executed. For example, the second process can be executed on a second computer that is connected to the first computer over a network, on a virtual machine, or in other execution environments. In this case a technical problem arises due to the complexity of monitoring the delivery of inter-process communication messages between processes from different operating systems to comply with the security policy. In order to comply with policy, typical technologies disallow monitoring of the delivery of inter-process communication messages between processes from different operating systems.

Therefore, there is a need for a method and a system for improving information security while monitoring of the delivery of inter-process communication messages between processes from different operating systems.

The scientific document XP055967100 entitled "Improving the Security of Building Automation Systems Through an seL4-based Communication Framework" by Habeeb Richard describes a secure communication framework for rich access control policy for operating system services and objects.

### SUMMARY

Aspects of the disclosure relate to information security, more specifically, to systems and methods of monitoring delivery of messages passed between processes from different operating systems (OSs). The method of the present disclosure improves the OS security for the exchange of inter-process communication messages passed between first and second processes from different operating systems, by creating a proxy process for sending and receiving messages from the second process which has a programming interface for the proxy process, and adding a security policy for monitoring the delivery of messages associated with the given proxy process. The method also increases the level of monitoring of the delivery of inter-process communication messages passed between first and second processes which are being executed on different operating systems.

In one example, a method is provided for monitoring delivery of messages passed between processes from different operating systems, the method comprising: creating a proxy process in a first Operating System (OS) for a second process, wherein the second process is from a second OS, the first and second OS being installed in respective computing environments, assigning at least one security policy to the created proxy process for monitoring delivery of messages associated with the created proxy process, where the messages are transmitted through a programming interface of the created proxy process corresponding to a programming interface of the second process, generating a security monitor for the first OS based on the created proxy process and security policies of the first OS, and monitoring the delivery of messages between at least a first process in the first OS and the second process, wherein the monitoring of the delivery of messages associated with the proxy process is based on the security policies.

In one example, the monitoring of the delivery of messages includes, for each message, at least an authorization or a prohibition of the delivery of the message.

In one example, the messages comprise at least one of: a request to launch a process, a request and a reply for implementing of communication between processes, and a process request to the security monitor.

In one example, the second OS comprises at least one of: a guest OS running on a virtual machine under a control of the first OS on a first computer, a guest OS running on a virtual machine, the first OS being a second guest OS running on a second virtual machine and connected to the first virtual machine through a hypervisor, and a second OS on a second computer that is connected to the first computer that is running the first OS over a network.

In one example, the security monitor is generated for the first OS using a generating tool.

In one example, the security monitor is generated based on features of an architecture of the first OS, the features including at least the created proxy process and the security policies assigned to the proxy process, the security policies being obtained from a security policy database.

In one example, the security monitor is generated by creating a code of the security monitor, the created code including at least one of: a source code, an intermediate code, and an executable code.

In one example, when monitoring the delivery of messages, the security monitor uses the programming interface of the proxy process to determine allowed messages for the proxy process, and a policy assignment tool is used to additionally specify a list of allowed messages according to the programming interface and to assign a security policy that prohibits the delivery of messages from the proxy process, when the security monitor detects an attempt to deliver messages that are not in the list of allowed messages.

In one example, when monitoring the delivery of messages, the security monitor uses the programming interface of the proxy process to determine a list of processes with which the proxy process is allowed to exchange messages, and a policy assignment tool is used to additionally assign a security policy that prohibits messages from being exchanged between the proxy process and processes that are not in the list of processes, wherein the list of processes includes at least the first process.

In one example, the proxy process is created for at least two processes of the second OS when a programming interface for exchanging messages exists between said at least two processes of the second OS.

In one example, the security policies use a model based on at least one of: basic operations, a finite state machine, a timed automation, a role-based access control, a mandatory integrity control, regular expressions, discrete events, object capability model, and a temporal logic.

According to one example of the disclosure, a system is provided for monitoring delivery of messages passed between processes from different operating systems, the system comprising at least one hardware processor of a first computer configured to: create a proxy process in a first Operating System (OS) for a second process, wherein the second process is from a second OS, the first OS being installed in the first computer and the second OS being installed in a different computing environment from the first computer, assign at least one security policy to the created proxy process for monitoring delivery of messages associated with the created proxy process, where the messages are transmitted through a programming interface of the created proxy process corresponding to a programming interface of the second process, generate a security monitor for the first OS based on the created proxy process and security policies of the first OS, and monitor the delivery of messages between at least a first process in the first OS and the second process, wherein the monitoring of the delivery of messages associated with the proxy process is based on the security policies.

The method and system of the present disclosure are designed to provide information security, in a more optimal and effective manner, enabling messages from processes executed on different OSs to be monitored.

## BRIEF DESCRIPTION OF THE DRAWINGS

The accompanying drawings, which are incorporated into and constitute a part of this specification, illustrate one or more example aspects of the present disclosure and, together with the detailed description, serve to explain their principles and implementations.

**Fig. 1a to Fig. 1e** illustrate block diagrams of exemplary inter-process communications using a security monitor based on an example of an operating system with a microkernel architecture.

**Fig. 2a** illustrates an exemplary security monitor generating system.

**Fig. 2b** illustrates an exemplary system for monitoring deliver of inter-process communication messages passed between first and second processes.

**Fig. 3a** illustrates an exemplary of a guest OS (second OS) running on a virtual machine under control of a first OS on a computer system.

**Fig. 3b** illustrates an exemplary of creating a proxy process for a virtual machine and security domains for the guest OS (the second OS).

**Fig. 4** illustrates a method for monitoring delivery of messages passed between first and second processes.

**Fig. 5** presents an example of a general purpose computer system on which aspects of the present disclosure can be implemented.

## DETAILED DESCRIPTION

Exemplary aspects are described herein in the context of a system, method, and a computer program for monitoring delivery of messages passed between processes from different operating systems. Those of ordinary skill in the art will realize that the following description is illustrative only and is not intended to be in any way limiting. Other aspects will readily suggest themselves to those skilled in the art having the benefit of the disclosure. Reference will now be made in detail to implementations of the example aspects as illustrated in the accompanying drawings. The same reference indicators will be used to the extent possible throughout the drawings and the following description to refer to the same or like items.

In order to describe the teachings of the present disclosure with clarity, a brief summary of terms used throughout the disclosure is first provided below.

A process refers to a sequence of operations in an execution of a program or a part thereof together with useful data, which includes one or more threads and associated system resources.

Inter-process communication (IPC) refers to a set of methods for exchanging data between multiple threads in one or more processes. The processes can be launched on one or more computers that are connected to each other via the network. IPC methods may be divided into methods of message passing, synchronization, shared memory, and remote procedure calls.

An operation refers to an elementary action performed within the process under consideration (an example of an operation can be an API function). A modem operating system uses both synchronous and asynchronous operations to exchange data between two processes using inter-process communication methods.

A security domain refers to a part of an automated system that implements the same security policies.

A finite state machine (FSM) refers to a model of a discrete device characterized by states and transitions from one state to another. Each state of the finite state machine characterizes one of the possible situations in which the finite state machine may be located.

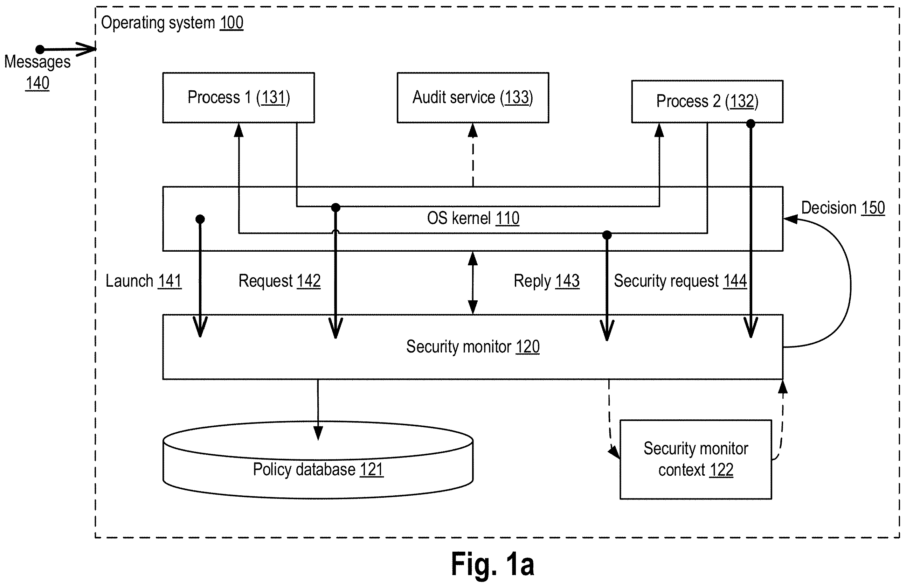

**Figs. 1a-1b** illustrate block diagrams of inter-process communications using a security monitor **120** based on an example of an operating system **100** with a microkernel architecture. The OS **100** shown in **Fig. 1a** includes isolated processes **131-132** of applications of the OS **100** that communicate with one another through inter-process communication, as well as with the OS kernel **110** by means of programming interfaces using messages **140** (also inter-process communication messages, IPC messages). Referring to **Fig. 1a**, for clarity, the inter-process communication messages are indicated by a bold arrow starting with a dot. Messages **140** include the following: a request to launch **141** from a process **131,** a request **142** from the process **131** or a response **143** from another process **132** (for example, calls to a method of process **132** by process **131),** a process request **132** to the security monitor **120** (such as security request **144).** It is worth noting that messages **140** in the present disclosure are understood to mean inter-process communication messages, in general providing the facility for communication between different processes of the OS **100,** including the processes **131-132.** The security monitor **120** is a component of the OS **100** designed to monitor the delivery of the above-mentioned messages **140.** Details of the implementation of the security monitor **120** will be disclosed below. The messages **140** may also include an error notification from the OS kernel **110** in response to the messages **140** from processes **131-132.** In this case, the above-mentioned interfaces implemented by the processes are data structures containing declared methods which implement the functionality of the corresponding process.

The above mentioned interfaces are statically defined and the allowed communications between the processes are defined in advance. In one example, the messages **140** are sent and received by processes **131-132** using system calls to the OS kernel **110.**

In one example, the system calls may include the following:

- call(): used by the process **131** to send a request **142** to the process **132** and receive a reply **143** to perform inter-process communication;
- recv(): used by process **132** to receive the request **142;** and
- reply(): used by process **132** to send the reply **143** to process **131.**

In one example, the system call reply() is executed in the same process thread in which the call recv() was executed.

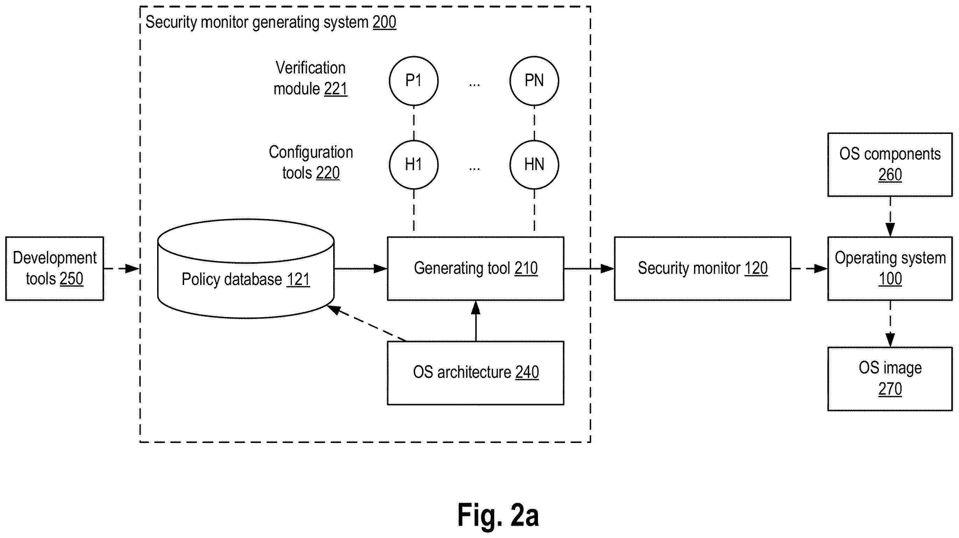

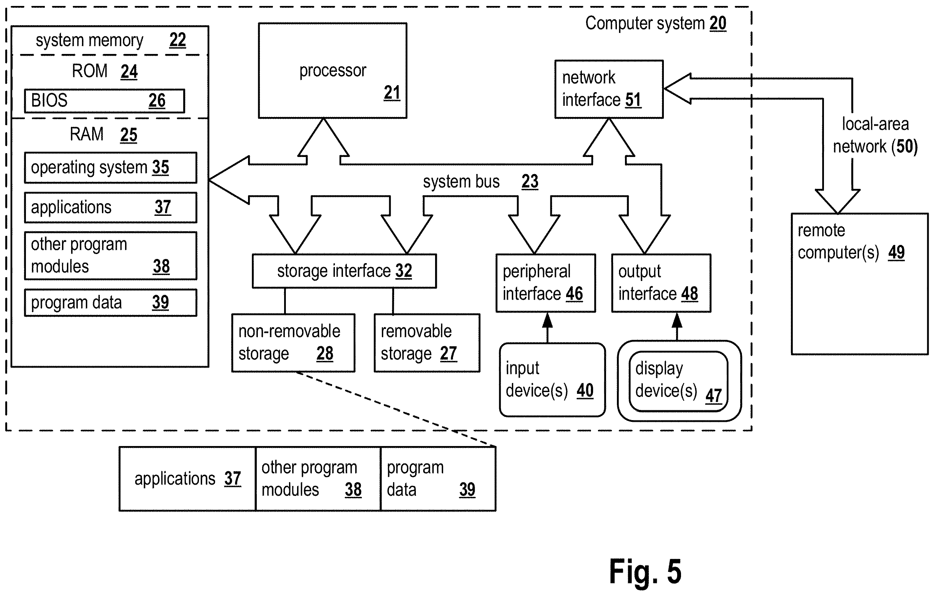

The security monitor **120** is implemented with the ability to run on a computer processor running the OS **100** (an example of a general purpose computer **20** is shown in **Fig. 5**). The security monitor **120** monitors the delivery of the messages **140** based on decisions **150**. The decisions **150** are based on security policies obtained from the policy database **121**. The policy database **121** is stored on a machine-readable computer medium (in memory) on which the OS **100** is installed, for example, on the storages **27** or **28** of the computer **20** (see **Fig. 5**). In one example, the monitoring of the delivery of the message **140** includes authorizing or prohibiting delivery of a message **140** and, respectively, authorizing or prohibiting the execution of communication that uses the message **140**. In one example, the decision **150,** by the security monitor **120,** of the method for monitoring the delivery of the message **140** indicates either an authorization or a prohibition of a transmission of the message **140** in compliance with the security policy. In one example, the decision **150** is used, by the security monitor **120** or its components, to implement the monitoring of the delivery of the messages **140** (see **Fig. 2a**). Based on the security policies from the policy database **121,** the decision **150** may be issued using the data in the message **140** (for example, the name of the process to be launched or the actual arguments of the process method called).

Also, the decision **150** on the method for monitoring the delivery of the message **140** may depend on the correctness of the structure of the message **140**. Thus, if the message **140** has an invalid structure, the transmission of the message **140** may be prohibited. In this case, valid structures of the messages **140** may be defined using a declarative description of the interface of the process-receiver of the message **140**. The above-mentioned structure may contain the size of the message **140,** valid arguments and other valid parameters of the message **140**.

In one example, the security monitor **120** may be part of the OS kernel **110,** or a separate application executed on the computer's processor.

In another example, the security monitor **120** runs on the computer's processor in the privileged mode of the OS kernel **110**.

One example of the OS **100** additionally may include an audit service **133,** designed to log results of the monitoring of the delivery of the messages **140**. In this case, the monitoring of the delivery of the message **140** additionally may include performing an audit using the audit service **133**. In another example, the security monitor **120** may perform monitoring of the delivery of messages **140,** additionally taking account of a current status of the audit service **133**.

In one example, the status of the audit service **133** indicates that the audit service **133** is ready to receive and store messages **140**. For example, if the process **131** sends a request **142** to a secure resource (via the process **132)** where the information about access to the secure resource should always be logged but the status of the audit service **133** indicates that the audit service **133** is not currently saving the messages **140,** then such a request **142** will be denied by the security monitor **120** in accordance with the security policy.

In another example, the OS **100** may contain the security monitor context **122,** wherein the security monitor **120** monitors the delivery of the messages **140** additionally taking into account the security monitor context **122,** where the security monitor context **122** contains values of security policy parameters.

In another example, the security monitor **120** may additionally be designed to change the security monitor context **122** taking into account the decisions **150** based on the security policies obtained from the policy database **121**.

In one example, the security policies use a finite state machine model, a mandatory integrity control model, or other models to implement the security policies. Details of these models will be described later in conjunction with the description of **Fig. 2a**. Depending on the models used by the security policies, the security monitor context **122** may contain different security policy parameters. For example, for security policies based on a mandatory integrity control model, the security monitor context **122** may contain values for integrity levels and access levels to protected resources. For security policies based on a finite state machine, the security monitor context **122** may contain a current value of the state of the finite state machine and a transition table of the finite state machine.

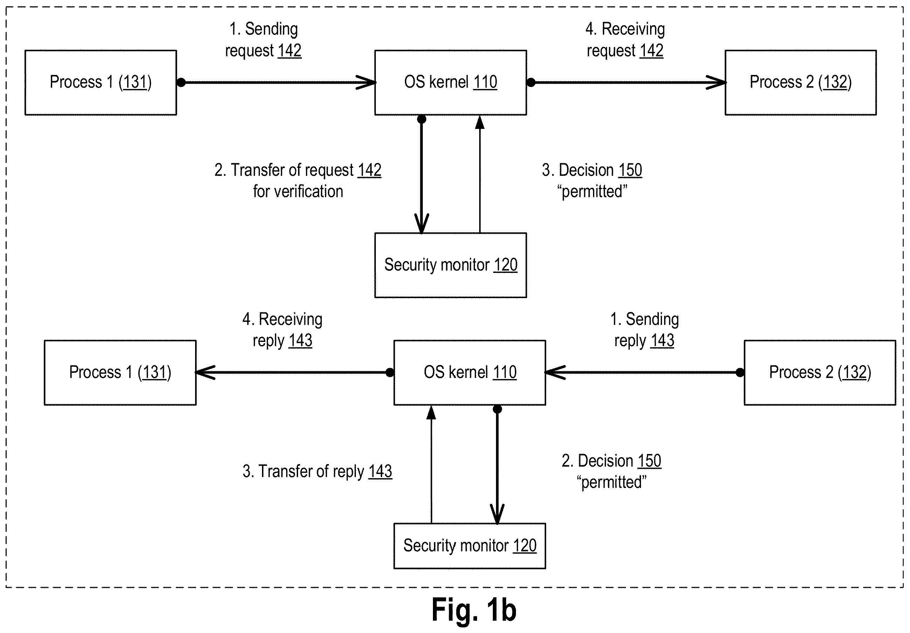

**Fig. 1b** illustrates an example block diagram of inter-process communications for monitoring a delivery of an allowed request **142** from a process **131** to a process **132** using a security monitor **120**. The process **131** can call an interface method of the process **132**. As such, the process **131** calls the interface method of process **132** by sending a request **142** containing the input arguments of the called method. Process **131** sends the request **142** via the OS kernel **110,** which in turn sends the request **142** to the security monitor **120** for verification. The security monitor **120** issues the decision **150** "permitted" based on the security policies and transfers this decision **150** to the OS kernel **110**. Then, the kernel **110** forwards the request **142** based on the decision **150** to process **132**.

For the example shown in **Fig. 1b**, process **132** then sends a reply **143** to process **131,** where the reply **143** contains the output arguments of the called method. The method for sending the reply **143** is the same as the method for sending the request **142,** but in reverse order, from process **132** to process **131**. That is, the process **132** sends a reply **143** using the OS kernel **110,** which in turn sends a reply **143** to the security monitor **120** for verification. The security monitor **120** issues a new decision **150** "permitted" based on the security policies and transfers this new decision **150** back to the OS kernel **110**. Then, the kernel **110,** based on the new decision **150,** forwards the reply **143** to process **131**.

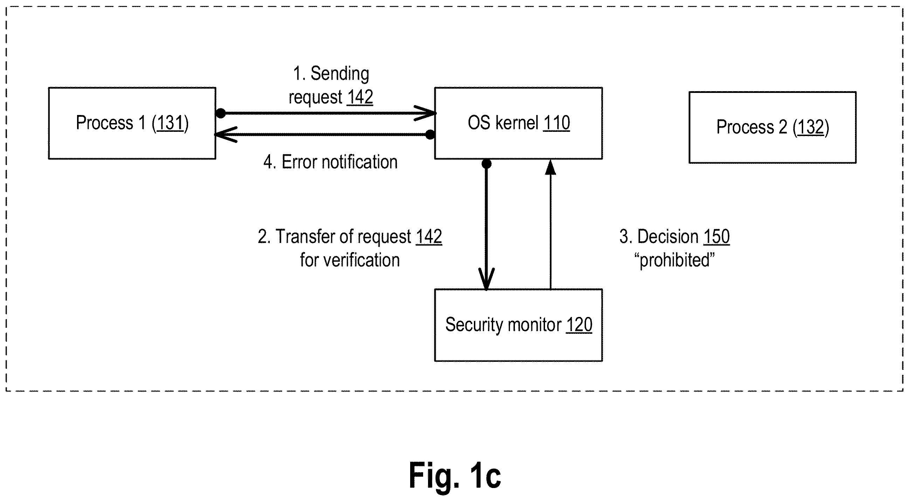

**Fig. 1c** illustrates an example block diagram of inter-process communications for monitoring a delivery of a denied request **142** from a process **131** to a process **132** using a security monitor **120**. Process **131** sends the request **142** via the OS kernel **110,** which in turn sends the request **142** to the security monitor **120** for verification. The security monitor **120** issues the decision **150** "prohibited" based on the security policies and transfers this decision **150** to the OS kernel **110**. The kernel **110** then sends an error notification to process **131** based on the decision **150**. In this case, the request **142** will not be transferred to process **132**.

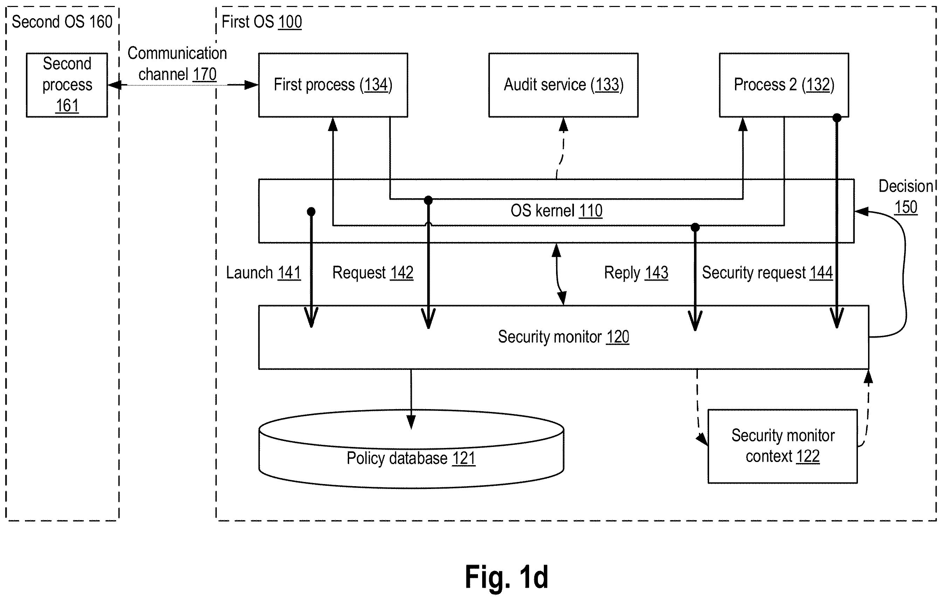

**Fig. 1d** illustrates an example block diagram of communication between the first process **134,** implemented in the first OS **100,** and the second process **161,** implemented in the second OS **160,** via a communication channel **170,** which is not monitored by the security monitor **120**. For ease of presentation, here and below the first OS is referred to as OS **100** (see **Fig. 1a**). It is worth noting that the second OS **160** can be any OS, the architecture of which may be known in the relevant art. Thus, the second OS **160** may include the operating system **100,** the architecture of which is represented in **Fig. 1a**. As such, the first OS **100** and the second OS **160** can be either different OS's (that is, they may have different OS architectures) or the same OS, but with the key difference that the first OS **100** and the second OS **160** are installed in different computing environments. Thus, the first OS **100** and the second OS **160** can be installed on different computers, virtual machines, or in mutually isolated software or hardware computing environments, which in turn are implemented with the ability to run on the computer **20** (see **Fig. 5**). One example of technology for isolating computing environments is the TrustZone technology.

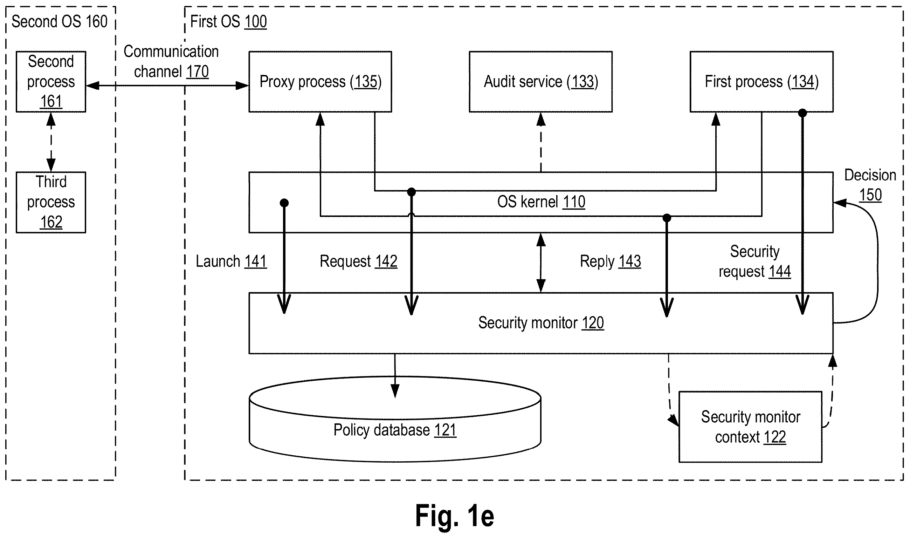

Thus, the first process **134** communicates with the second process **161** using the communication channel **170,** such as a computer network, a virtual machine transport mechanism (for example, the paravirtualization extension VirtIO), and another communication channel depending on the computing environments on which the first OS **100** and the second OS **160** are installed. However, there are several disadvantages to the communication illustrated in **Fig. 1d**. Specifically, for the communication between the first process **134** and the second process**161,** the delivery of the messages **140** which are exchanged between these processes occurs over the communication channel **170,** which cannot be monitored by the security monitor **120** for ascertaining compliance with security policy **121**. This reduces the security of the first OS **100** when exchanging messages **140** passed between the first **134** and the second **161** processes. Thus, the example of the communication between the first **134** and the second **161** processes presented in **Fig. 1d** does not solve the stated technical problem. In contrast, as shown in **Fig. 1e**, for the communication between the first process **134** and the second process **161,** the method of the present disclosure can be used to solve the specified technical problem.

**Fig. 1e** illustrates an example block diagram of a secure communication between the first process **134,** implemented in the first OS **100,** and the second process **161,** implemented in the second OS **160**. It is worth noting that in general, the second process **161** may communicate with multiple processes in the first OS 100, one of which is represented in the figure as the first process **134**. However, for ease of presentation, only the first process **134,** which communicates with the second process **161,** will be considered in the following description. As in the previous example shown in **Fig. 1d**, the first OS **100** is connected to the second OS **160** via a communication channel **170** that is not monitored by the security monitor **120**. The second OS **160** can be any OS with an architecture known from the prior art, including the operating system **100,** the architecture of which is shown in **Fig. 1a**. The first OS **100** and the second OS **160** can be installed on different computers, virtual machines, or in computing environments isolated from each other in software or hardware, which in turn are implemented with the ability to run on the computer **20** (see **Fig. 5)**. However, the second process **161** does not communicate with the first process **134** directly, but using a previously created proxy process **135**. In this case, the proxy process **135** shown in the first OS **100** (but not in the second OS **160),** is designed for exchanging messages **140** with the second process **161** via the communication channel **170** and has a programming interface corresponding to the programming interface of the second process **161**.

In one example, when monitoring the delivery of messages **140** the security monitor **120** uses the programming interface of the proxy process **135** to determine the allowed messages **140** for the proxy process **135**. However, at least one security policy is pre-defined in the policy database **121** to prevent the delivery of messages **140** from the proxy process **135** if the security monitor **120** has detected an attempt to deliver messages **140** that are not in the allowed list. In this case, the list of allowed messages **140** and the corresponding security policies are pre-defined using the policy assignment tool **290** when the security monitor **120** is generated (see **Fig. 2a-2b).** Thus, the first process **134** communicates with the proxy process **135** by sending inter-process communication messages **140** and under the control of the security monitor **120,** while the proxy process **135** is connected to the second process **161** via the communication channel **170,** wherein the security monitor **120** does not monitor the communication channel **170**.

In one example, in the second OS **160** there is a separate proxy process corresponding to each second process. For example, the proxy process **135** corresponds to the second process **161,** and the second proxy process (not shown in the figure), different from the proxy process **135** corresponds to the third process **162**. In addition, in a preferred embodiment, the processes **161** and **162** are not interconnected. In this case, in one example, in the second OS **160,** the second process **161** can be connected to the third process **162** using the application interface for exchanging messages **140.** In this example, it is possible to use one proxy process **135** common to both mentioned processes **161** and **162**. Thus, the processes **161** and **162** form a single security domain, communication with which takes place through a single proxy process **135,** which also allows the communication between the second **161** and third **162** processes of the second OS **160** to be monitored. It is worth noting that the aforementioned security domain, which includes the processes **161** and **162,** may also include more processes of the second OS **160,** not shown in the figure. In another scenario, when the second OS **160** contains multiple distinct security domains, wherein each distinct security domain includes at least one second process, a separate proxy process may be defined in the first OS **100** for each of the distinct security domains.

The above system (as shown in Fig. 1e) used for communication between the first **134** and second **161** processes allows the specified technical problem to be solved and the stated technical results to be achieved, namely to improve the security of an OS during the exchange of messages **140** for inter-process communication passed between the first **134** and the second **161** processes of different operating systems. The technical problems are solved by: creating a proxy process **135** for sending and receiving messages **140** from the second process **161,** wherein the second process **161** has a programming interface for the proxy process **135;** adding a security policy for monitoring the delivery of messages **140** related to the aforementioned proxy process **135,** and increasing the monitoring of the delivery of messages **140** for inter-process communication passed between the first **134** and the second **161** processes. More information about examples of the present disclosure regarding the creation of the proxy process **135** and the assignment of security policies to the proxy process **135** created, will be described below.

**Fig. 2a** illustrates an exemplary security monitor generating system **200.** The security monitor generating system **200** is used to improve the security of the OS **100** when exchanging messages **140** and to perform monitoring of the delivery of said messages **140** to the recipients. In this case, the security monitor **120** can be used by software developers in different operating systems **100** as well as in any other computer systems in which message passing **140** is used, in particular, in databases and in application software. An example of this use was described earlier in conjunction with the descriptions of **Figs. 1a-1b.** For each operating system **100,** a security monitor **120** is constructed based on features of the OS architecture **240** and by taking account of the security requirements for that operating system **100,** as expressed in the security policies. It is worth noting that for various software and firmware development systems based on OS **100** (hereafter referred to as the development system), the main objects of the OS architecture **240** can be shared. For example, processes, services, applications, drivers that are responsible for operating the OS kernel **110,** and other components of the operating system **260,** can be shared. At the same time, other objects of the OS architecture **240** that are responsible for the functionality of the development system will be different for each of the mentioned systems. Therefore, there will also be different security policies that are used to monitor the delivery of messages **140.** Development systems can include software as well as firmware systems.

The system **200** contains the policy database **121** designed to store the security policies required to monitor the delivery of messages **140.** The system **200** also contains at least one configuration tool **220** which is designed to configure the corresponding verification module **221** based on the security policies received from the generating tool **210.** The verification module **221** is designed to issue a decision **150** on the method for monitoring the delivery of the message **140** (hereafter, the decision) at the request of the security monitor **120,** while implementing the security policy. The system **200** also contains a description of the OS architecture **240,** which in turn includes OS architecture objects such as the processes and applications of the OS **100.**

In one example, the mentioned OS architecture objects additionally include objects of the development system based on the OS **100.**

In another example, the OS architecture objects additionally include:

- a process that represents a service and that includes at least one software component designed to implement the software interface of the given process, wherein communication with the given process takes place by means of the above-mentioned interface (for example, such a service could be an application that translates the flow of external events and requests for the event processing process); and
- a list of software interfaces for each process, wherein the corresponding interface methods which implement the functionality of the corresponding process can be specified.

In another example, the OS architecture object is additionally a resource driver - a process that manages resources and access to the resources. In one example, the resource is, in particular, a file, port, or process. For example, the file system may be a resource driver, and the files themselves may be resources to which the file system provides access by other processes.

In one example, the system **200** further contains a generating tool **210** designed to analyze security policies, where the analysis consists, inter alia, in identifying the processes for which the given security policy is used.

In one example, the above analysis takes into account the OS architecture objects **240,** including the above-mentioned processes and applications. The generating tool **210** is also designed to select security policies from the policy database **121** for the corresponding configuration tools **220** and to transfer at least one selected security policy to the corresponding configuration tool **220.** In one example, the generating tool **210** is also designed to generate a security monitor **120** using the configured verification modules **221** obtained from each configuration tool **220,** based on the analysis results.

In one example, the generating tool **210** generates the security monitor **120** by creating the code of the security monitor **120**. In one example, the code of the security monitor **120** may be a source code, an intermediate code, or an executable code. In one example, the generation of the code of the security monitor **120** may further include code optimization and error analysis. Thus, the generating tool **210** may be the compiler that generates the code in question.

The OS architecture **240**, the policy database **121** and the configuration tools **220** can be pre-configured using the development tool **250**. To do the pre-configuration, the development tool **250** may provide a set of APIs (application programming interfaces) or plug-in modules for software development. The term "interface" is used hereinafter to refer to the process interface described earlier, and the abbreviation "API" is used hereinafter to refer to the application programming interface.

In one example, at least part of the OS architecture **240**, part of the security policies from the policy database **121**, and part of the configuration tools **220** may be shared (based on templates) across different operating systems **100**. In this case, using the development tools **250**, the developer may configure the configuration tools **220**, the OS architecture **240**, and the security policies from the policy database **121**. The configuring may be performed by: adding, to the template in question, the security policies in the architecture of the OS **240** that are missing from the template, as well as the configuration tools **220** that are necessary to reflect the features of the OS **100** or the development system based on the OS **100**, and the security requirements of the OS **100** or of the development system based on the OS **100**, respectively, for which the developer generates the security monitor **120**. In addition, some of the data can be deleted from the template in question, if it will not be needed in the OS **100** or in the OS development system **100**, respectively. For example, some security policies and applications may be deleted.

The security monitor **120** generated, together with the other components of the OS **260**, are also incorporated into the operating system **100**. The incorporation of the security monitor **120** and the OS components **260** may be implemented using known techniques, for example, during the compilation stage of the OS **100** using the OS **100** compiler, or by installing the security monitor **120** on the OS **100**. As mentioned earlier, the security monitor **120** may be part of the OS kernel **110** or be a separate application of the OS **100**. The security monitor **120** runs in a privileged mode on the OS kernel **110**. For the OS **100**, an OS installation image **270** may also be created to install the OS **100** on end-user computing devices. The OS installation image **270** may be, for example, an archive, an executable file, or an installation package. The installation package is an archive file that includes the files of the OS **100**, control files, and optionally, files for configuring the installation process of the OS kernel **110**. In addition, the installation package may include system developer files based on the OS **100**. These files may be provided as source code, intermediate code, or executable code.

The description of the security policies, in accordance with the teachings of the present disclosure, are provided below.

In one example, the security policies use at least one of the following models:

    a. basic operations;
    b. finite state machine;
    c. timed automaton;
    d. role-based access control;
    e. mandatory integrity control;
    f. regular expressions;
    g. discrete event systems (DES);
    h. object capability model (mandatory references); and
    i. temporal logic.

The security policies from the policy database **121** may be defined using a specification language, such as PSL (policy specification language). In the PSL example, mandatory integrity control is defined by the policy class Mandatory_integrity_control. The class (family) of security policies defines a set of rules that match the rules of the model used in the security policy. The security policy specification determines the correspondence of these rules with communications in the system that can be implemented by exchanging messages **140** between processes. For each communication attempt, that is, each time the security monitor **120** verifies the messages **140**, the security monitor **120** applies the rules to determine a decision as to the validity of the given communication (delivery of message **140**). To use a policy class, a policy object is created based on it, for which the configuration is specified.

In one example, the analysis of the security policy and objects of the OS architecture **240** includes at least one of the following types of analysis: lexical analysis, syntactic analysis, semantic analysis. This security policy analysis identifies objects of the OS architecture **240**, in particular, the processes involved in the exchange of messages **140**, for which the specified security policy applies. That is, a correspondence is determined between the identified objects in the OS architecture **240** and the security policy applied to the specified objects. For example, if a security policy allows a request **142** from process **131** to process **132**, an analysis of that security policy identifies specific processes **131-132** and information about the allowed request **142**. It is worth noting that as a result of this security policy analysis, other objects of the OS architecture **240** that are verified in the specified security policy may be further identified. For example, when the message **140** is addressed to a specified method, process interface methods will be passed to the specified process interface. In this case, the security policies will verify the requirement that the defined process interfaces and defined interface methods are used when messages **140** are passed between the identified processes.

In the example of the PSL language, which can be used to define security policies in the policy database **121,** a reference to the process **131,** which is the source of the request **142,** may be contained in the variable scr. A reference to the process **132,** which is the destination of the request **142,** may be contained in the variable dst. Accordingly, it is the above-mentioned analysis of the security policy, written in the PSL language, that will allow identification of the specified OS architecture objects for which the specified security policy will be applied.

In another example, the analysis of the security policies also includes verification of the types of the objects of the OS architecture **240,** as well as an analysis for errors in the security policies.

The results of the above analysis are taken into account in generating the security monitor **120.** For example, the security monitor **120** may record the application conditions of the security policies - a list of objects of the OS architecture **240,** in particular processes and security policies corresponding to this list, as well as the verification modules **221.** Therefore, when a message **140** is received from the OS kernel **110,** the generated security monitor **120** identifies the objects of the OS architecture **240** participating in the message passing **140** and then determines the security policies that are applied to the specified objects of the OS architecture **240.** The security monitor **120** then sends the messages **140** to the verification modules **221,** which correspond to the specified security policies, to decide on which method to use for monitoring the delivery of the message **140.**

In another example, a syntactic analysis is carried out by constructing a syntactic tree for the code of the security monitor **120,** wherein the syntax tree includes the code of the verification modules **221** generated by the at least one configuration tool **220.**

Security policies may use basic operations that allow or prohibit passing of the message **140** on the condition that the parameters of the message **140** (for example, the name of the process to be launched or the actual arguments of the method to be called) match the data specified in the security policy. For example, the security policy might determine that the process 131 may receive any messages **140,** but that the process **131** is not allowed to send messages **140.**

The security policies may also use a finite state machine, where the security policy determines whether the message **140** is allowed or denied depending on the state of the finite state machine and in accordance with the state transition table of the finite state machine.

The timed automata model, in particular timed automata of the ERA type (event-recording automata), is a special case of finite state machines. In this model, an additional time parameter (timer) is defined for each message **140,** equal to the time since the last receipt of this message **140.** For example, a transition from one finite state machine state to another state may be made if the message **140** was received after the time determined by the timer.

The Mandatory integrity control model is used to allow or deny the delivery of a message **140.** According to the mandatory integrity control model, using the security monitor **120** the objects of the OS architecture **240** involved in passing the message **140,** for example, the processes **131-132,** are mapped to two numbers called the integrity level and the access level. In the process, security policies based on mandatory integrity control are used to allow the delivery of a message **140** from one object to another, that is, using the values of the integrity levels and the access levels of the objects. For example, a security policy may be used that allows one object to access another object if the value of the access level of the first object is not less than the integrity level of the other. In the PSL specification language, integrity levels and access levels are defined for the mandatory integrity control model.

Thus, to set the integrity levels, an 'integrity' policy object is defined as an instance of

the Mandatory_integrity_control class:

```
policy object integrity =
    Mandatory_integrity_control {
        Config {
            levels : ["LOW", "MEDIUM", "HIGH"]
        }
    }
```

The integrity policy object configuration will define three levels of integrity: LOW, MEDIUM, and HIGH, in ascending order. That is, LOW < MEDIUM < HIGH.

Policies based on object capability model (mandatory references) are based on the principle of minimum privileges. This principle of organization of access to resources implies that only privileges that are absolutely necessary for the successful completion of a task are provided to the subject (process or user). For example, a user who wants to find out the contents of a file should only be granted read permission for that file and only for the duration of the use of that file.

To define security policies based on temporal logic, security properties (requirements) are formulated based on a temporal logic formula and using temporal operators. Using the security monitor **120,** the OS architecture objects **240** involved in the passing of the message **140,** such as the processes **131-132,** are mapped to their state events from a predefined set of events.

As an example, the application of security policies based on temporal logic to the software installation process from a software image will be considered. Several components (which are the processes **131-132),** such as the verification tool and the installation tool, may be involved in the installation process. The software installation process may include verifying the integrity of the software image by the verification tool and then installing the software from the software image by the installation tool if the integrity of the software image is not compromised. The integrity of the software image determines the consistency, completeness, and integrity of the software image data. The integrity of the software image can be verified by validating the electronic digital signature. For the aforementioned software image, the set of events can include the following: {seal, verify, apply}, where seal is the event of "sealing" the software image, verify is the event of verifying the integrity of the software image, and apply is the event of installing the software from the software image. The security properties are formulated, for example, as follows:

**Property 1.** Whenever a software image integrity verification is performed, it must be ensured that after the software image integrity verification process, the software image in question will not be changed.

This property can be written as the formula:

$$G \, (verify => P \, seal),$$

where G is the temporal operator "always in the future", P is the temporal operator "at least once in the past".

Property 1 means that whenever the integrity of the software image has been verified in the past, it must be ensured that no further data is written to the software image.

**Property 2.** Installing the software from a software image is only possible if the integrity of the software image is confirmed. This property can be written as the formula:

$$G \, (apply => P \, verify).$$

The construction of a policy class object that implements access control based on temporal logic can be implemented in the PSL language as the following structure:

$$policy \, object \, tl\_checker = TL \, \{$$

$$config \, ``G \, (verify => P \, seal) \, /\backslash \, G \, (apply => P \, verify)"$$

$$\}$$

It is worth noting that other formulations of the properties are also possible. For example, property 2 can be defined as follows: the software image is not applied until the integrity of the software image has been confirmed:

!apply U verify,

where U is the temporal operator "until such time as the specified event occurs".

A policy based on a temporal logic model when installing the software associates the apply event with this interprocess communication and verifies the truth of the formula specified in the policy object configuration. If the formula is true, the policy allows the communication, and if false it denies it.

Policies based on a discrete event model are defined using the verification module **221** corresponding to the policies. These security policies may also be described in the PSL specification language. These security policies may be applied to development systems that contain a large number of components. For the system mentioned above, the model with discrete events is a resultant finite state machine which is defined by a combination of a set of finite state machines, each of which describes a separate component of the system. For each finite state machine, the set of its states and transitions between them are indicated when certain events occur. The state of the resultant finite state machine is determined by a combination of the states of the finite state machines of the system components. In this case, the specified combination is implemented, for example, by a synchronous or asynchronous production of finite state machines. For the resultant finite state machine, a list of allowed transitions, a list of allowed states, and a list of prohibited states of the resulting finite state machine are also specified. Accordingly, the security policies are used to verify the transition of the finite state machines of the system components and the resulting finite state machine into the initial state defined in the configuration of the corresponding finite state machine, the transition between states on the occurrence of a specific event, the occupation of one of the defined states by the corresponding finite state machine.

In another example, different configuration tools **220** are selected for the security policies that use the different models. For example, the security policies may be combined into policy classes. A security policy class is a set of semantically linked policies that implement a specific security policy model. A first class of policies may consist of security policies that use a finite state machine, and a second class of policies may consist of security policies that use mandatory integrity control. In this example, configuration tool 1 may be selected for security policies from the first class, while configuration tool 2 may be selected for security policies from the second class. The examples described will allow configuration tools **220** to be developed that are designed to configure verification modules **221** for security policies from a single class. In addition, when adding a new security policy to the policy database **121,** the existing configuration tool **220** may be used without the need to redesign the configuration tool **220** or to add a new configuration tool **220.**

In another example, using the generating tool **210,** the security monitor **120** may additionally include a security monitor context **122,** wherein the security monitor **120** monitors the delivery of the messages **140** additionally taking account of the context **122,** where the security monitor context **122** contains the values of the security policy parameters.

In another example, the security monitor is additionally designed to change the context **122** to take into account the decisions **150** that are made based on the security policies. Depending on these models used by the security policies, the context **122** may contain different security policy parameters. For example, for security policies based on the mandatory integrity control model, the context **122** may contain values for integrity levels and access levels to the protected resources. For security policies based on a finite state machine, the context **122** may contain the current value of the state of the finite state machine and the transition table of the finite state machine.

In one example, if the message **140** complies with at least two security policies, an overall decision for the security policies in question may additionally be calculated by conjoining the decisions for each of these security policies, wherein the security monitor **120** monitors the delivery of the messages **140** additionally taking account of this general decision. When the process **131** or process **132** initiates a communication by sending the message **140,** the security monitor **120** invokes all security policies from the policy database **121** associated with that particular communication. If all security policies have issued an "allowed" decision, then the security monitor **120** issues an overall "allowed" decision. If at least one policy has issued a "prohibited" decision, however, the security monitor **120** issues the overall decision of "prohibited".

In another example, the configuration of the verification module **221** involves the creation of code to issue the decision **150** at the request of the security monitor **120** for a security policy when implementing the security policy.

In one example, the security monitor **120** monitors the delivery of the message **140** additionally taking account of the decisions **150** based on the security policies related to the messages **140** in question.

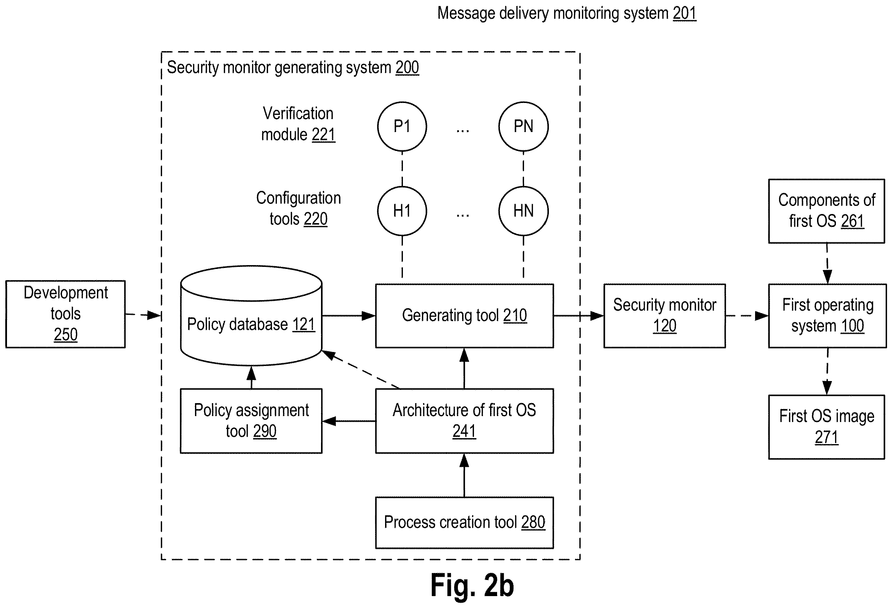

**Fig. 2b** illustrates an exemplary system **200** for monitoring the delivery of inter-process communication messages passed between the first **134** and the second **161** processes. To monitor the delivery of messages **140** passed between the first **134** and the second **161** processes, the security monitor generating system **200 (Fig. 2a)** can be used to generate the security monitor **120** for the first OS **100.** In this way, the system for monitoring the delivery of messages **201** uses the security monitor generating system **200** and additionally includes a process creation tool **280** and a policy assignment tool **290.**

It is worth noting that the tools and modules described, in particular, the configuration tool **220,** the generating tool **210,** the development tool **250,** the process creation tool **280,** and the policy assignment tool **290** are implemented with the ability to run on the processor of the computer (see **Fig. 5).** In this case, the policy database **121,** the architecture of the first OS **241,** and the verification modules **221** are contained in the memory of the computer.

The process creation tool **280** is designed to create a proxy process **135** for the second process **161,** where the proxy process **135** is designed to exchange messages **140** with the second process **161** on the second OS **160** and has a programming interface corresponding to the programming interface of the second process **161.** The process creation tool **280** receives information about the second process **161,** in particular its programming interfaces, from the development tool **250.**

Thus, information about the first process created **134,** which communicates with the second process **161** on the second OS **160,** may be added to the architecture of the first OS **241** by the process creation tool **280.** The policy assignment tool **290** is designed to assign security policies to the created proxy process **135** for monitoring the delivery of messages **140** associated with the proxy process **135,** where these messages **140** are passed through a defined programming interface. The security policies assigned to the proxy process **135** may be stored in the policy database **121.** Once generated, the security monitor **120** may perform monitoring of the delivery of messages **140** between the first **134** and the second **161** processes, including messages **140** associated with the aforementioned proxy process **135,** and the aforementioned monitoring is performed based on the security policy assigned by the policy assignment tool **290.**

In one example, when monitoring the delivery of messages **140** the security monitor **120** uses the programming interface of the proxy process **135** to determine the allowed messages **140** for the proxy process **135.** At the same time, the policy assignment tool **290** is used to define a security policy that prohibits the delivery of messages **140** from the proxy process **135** if an attempt has been detected to deliver messages **140** that are not in the allowed list. The list of allowed messages **140** and the associated security policies are pre-defined using the policy assignment tool **290** when generating the security monitor **120.** In another example, when monitoring the delivery of messages **140,** the security monitor **120** uses the programming interface of the proxy process **135** to determine the list of processes which are allowed to exchange messages **140** with the proxy process **135.** The list of processes includes at least the first process **134.** The policy assignment tool **290** also assigns a security policy that prevents the exchange of messages **140** between the proxy process **135** and processes that are not on the aforementioned list. Valid structures of allowed messages **140** may be defined using a declarative description of the second process interface **161.** These structures may contain the size of the message **140,** valid arguments and other valid parameters of the message **140.**

Thus, to implement inter-process communications of the second process **161** with the first process **134** using the method of the present disclosure, a proxy process **135** is created. The proxy process **135** implements all the programming interfaces of the second process **161.** Security policies are assigned for the created proxy process **135** for monitoring the delivery of messages **140** between the second **161** and the first **134** processes via the allowed interfaces. The system of the present disclosure allows the security monitor **120** to monitor the delivery of messages **140** between the second **161** and the first **134** processes by monitoring the delivery of messages **140** associated with the aforementioned proxy process **135,** taking into account the security policy, even despite the presence of an insecure communication channel **170.** As a result of this, the technical problem described in the present disclosure is addressed.

In another example, for the processes **161** and **162** of the second OS **160,** between which there is a software interface for exchanging messages **140,** the process creation tool **280** is used to create a single proxy process **135** common to both of the aforementioned processes **161** and **162.** It is worth noting that if the processes **161-162** are not linked to each other, that is, they are separate security domains, then a separate proxy process will be created for each one. For example, for the second process **161** a proxy process **135** will be created for communication with the first process **134.** And for the third process **162,** another proxy process (not shown in the figure) will be created for communication with another process (not shown in the figure) in the first OS **100.**

In one example, the second OS **160** is one of:

a) a guest OS running on a virtual machine under the control of the first OS 100 on a computer;
**b)** a guest OS running on a virtual machine, the first OS **100** being a second guest OS running on a second virtual machine and connected to the first virtual machine by means of a hypervisor;
**c)** a second OS **160** on a second computer that is connected to the computer on which the first OS **100** is running, over a network or via other communication channels **170.**

In one example, when the second process **161** contains more than one execution thread, for each thread in the second process **161,** a corresponding thread is created in the proxy process **135.** In this case, the thread of the second process **161,** which performs the exchange of inter-process communication messages, calls the driver method of the communication channel **170** (using system calls to I/O operations, such as ioctl), which in turn notifies the proxy process **135** that a thread must be created in the proxy process **135** to exchange inter-process communication messages between the process and the corresponding thread of the second process **161.** After completion of the exchange of messages **140** between the threads of the second process **161** and the proxy process **135,** the second process **161,** by calling the driver method of the communication channel **170,** notifies the proxy process **135** about the completion of the exchange of messages **140** with it. The proxy process **135** then terminates the execution of the corresponding thread in the proxy process **135.**

The communication channel **170** driver is designed to establish a communication channel **170** between the second process **161** and the proxy process **135,** to control the threads for the proxy process **135,** to implement the call(), recv(), reply() calls, wherein the programming interface of the proxy process **135** corresponds to the interface of the second process **161,** and also to deliver the messages **140** from the second process **161** to the corresponding thread of the proxy process **135.**

It is also worth noting that when creating proxy processes, for example, the proxy process **135,** a common proxy-process template may be used for different processes of the second OS **160,** but for different processes of the second OS **160** a software interface corresponding to the interface of the second process **161** will be implemented in the corresponding proxy process. Thus, the use of a common proxy-process template increases the security of the claimed invention by allowing the possibility of a more detailed verification of the code of the specified template, as well as the use of common security policies. However, although some security policies may be the same for different processes in the second OS **160,** some of the security policies may be different.

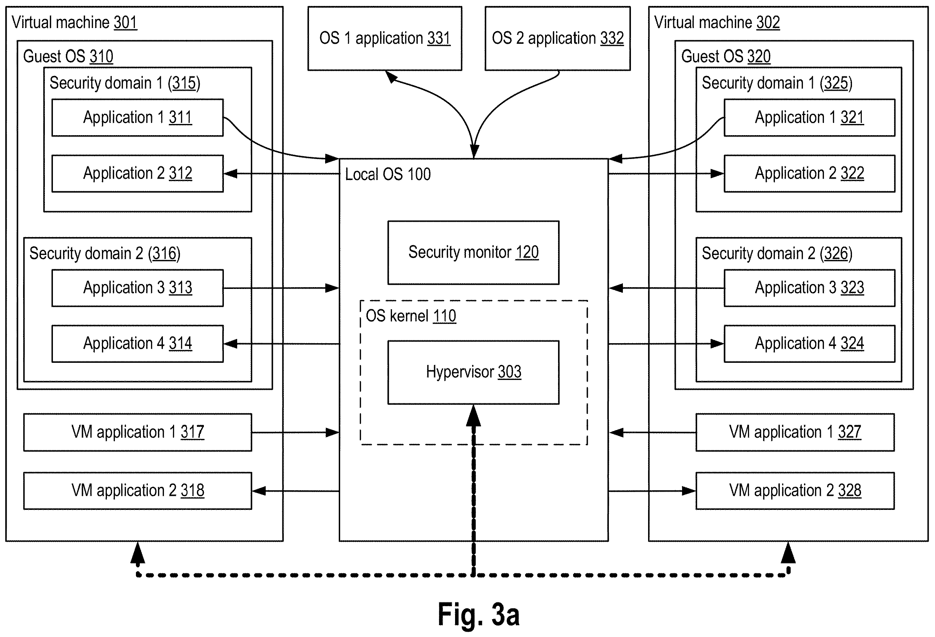

**Fig. 3a** illustrates an exemplary of a guest OS (second OS **160**) running on a virtual machine under control of a first OS **100** on a computer system (an example of a general-purpose computer **20** is illustrated in **Fig. 5).** The first OS **100** has a hypervisor **303** installed, which is a module (service) of the OS kernel **110** and controls the virtual machines **301-302.** The aforementioned virtual machines **301-302** are applications of the first OS **100,** which run in the user space on the processor of the computer. The hypervisor **303** may use any known virtualization solution to operate the virtual machines. An example of a hypervisor **303** is a Kaspersky Secure Hypervisor (KSH), a secure virtualization system based on the second type of hypervisor, where the first OS **100** (for example, KasperskyOS) acts as a host machine. In this case, the hypervisor **303** exports the component interface which uses the virtual machines **301-302** to manage the sessions, the virtual processors, memory, and low-level device polling. In addition to the virtual machines, other applications **331-332** may run on the first OS **100.** In one example, the aforementioned applications **331-332** and virtual machines **301-302** contain one process each, but may also be implemented using multiple processes and run on the processor of the computer.

In the context of a virtual machine application **301,** a virtual machine running a guest OS **310** is created, which then controls the operation of guest functional components that are implemented using guest processes and applications. As an example, the applications **311-314** are created in the guest OS **310,** divided over two security domains **315-316.** In general, the functional components of the guest OS **310** run in different security domains, with the guest OS **310** providing isolation of these security domains and the hypervisor **303** providing isolation of the guest OS **310** from the virtual machines represented by the applications **317-318.** Similarly, in the context of the virtual machine application **302** a virtual machine with guest OS **320** is created.

The delivery of messages **140** for inter-process communication from the various security domains **315-316** of the guest OS **310** and also from the virtual machine application **301,** which is a separate security domain, are monitored by the security monitor **120** of the first OS **100** independently using the proxy processes created for each security domain. Similarly, the security monitor **120** monitors the delivery of messages **140** from the virtual machine application **302** and from the security domains **325-326** of the guest OS **320.** In this case, the virtual machine **301** monitors the communication between the security domains **315-316** within the guest OS **310,** monitors its own security policies within the virtual machine **301,** controls access to the guest OS **310** hardware, data flows for the emulated devices, and other communications within the guest OS **310.**

The communications monitored by the security module **120** are indicated in **Fig. 3a** by a solid line with arrows. The communications that are not monitored by the security monitor **120** are indicated in **Fig. 3a** by a dashed line - for example, communications between the hypervisor **303** and the virtual machines **301-302** that require the privileged mode of the OS kernel **100,** which cannot be implemented in user mode in applications of the virtual machines **301-302.** In this case, the communications between the different virtual machines **301-302** are also monitored by the security monitor **120.**

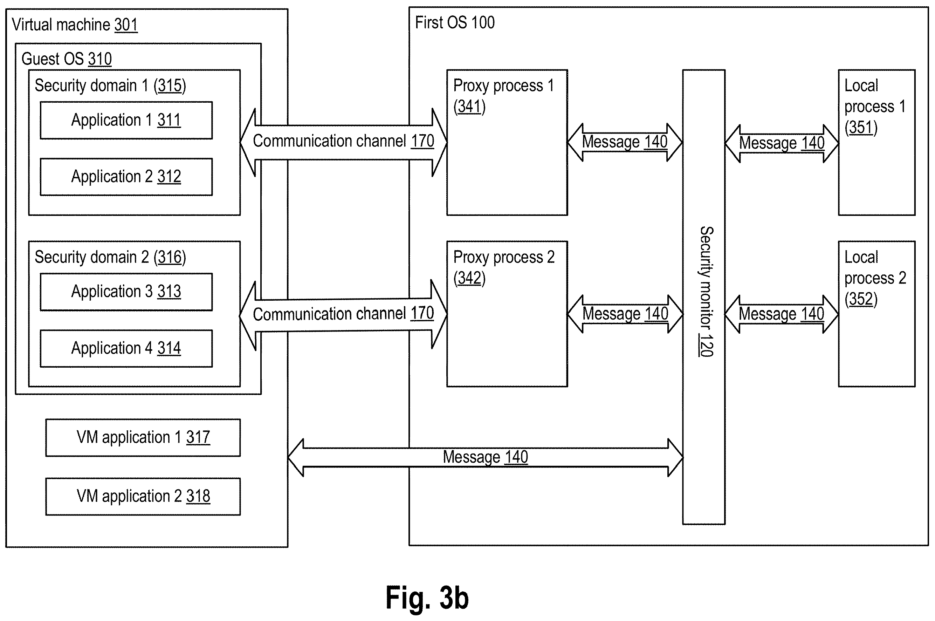

**Fig. 3b** illustrates an exemplary of creating a proxy process for a virtual machine **301** and security domains for the guest OS (the second OS **310**). For example, the proxy process **341** may be created for the security domain **315** and the proxy process **342** may be created for the security domain **316.** The created proxy processes **341-342** communicate with other processes of the first OS **100** using inter-process communication messages **140.** The delivery of the inter-process communication messages is monitored by the security monitor **120.** The virtual machine **301,** as a separate security domain and as a process of the first OS **100,** communicates with other processes of the first OS **100** via the messages **140,** the delivery of which is also monitored by the security monitor **120.** In other words, the virtual machine **301** does not require a separate proxy process to be created. It is also worth noting that the created proxy processes **341-342** will have programming interfaces that correspond to the programming interfaces of the security domain **315** and the security domain **316** respectively.

As described earlier, the messages **140** are sent and received by the processes of the first OS **100** using system calls to the OS kernel **110** and via the defined programming interfaces.

The system calls may include the following:

- call(): used by process **131** to send a request **142** to process **132** and receive a reply **143** to perform inter-process communication;
- recv(): used by process **132** to receive the request **142;** and
- reply(): used by process **132** to send the reply **143** to process **131.**

In one example, the system call reply() is executed in the same process thread in which the call recv() was executed.

To identify the recipient and the sender of the messages **140** in the guest OS **310,** unique identifiers are used. The values of the unique identifiers are equal to the values of the process descriptors used by the proxy processes **341-342** for exchanging the messages **140** in the first OS **100.**

In one example, the messages **140** generated by the second process as well as other processes of the guest OS **310** (in this example, security domains **315-316** and the virtual machine application **301)** are represented in the format of the messages **140** passed in the first OS **100.** In this case, the corresponding proxy processes **341-342,** having received messages **140** from the processes of the guest OS **310,** being the second OS **160** (security domains **315-316),** perform the subsequent sending of messages **140** to the corresponding processes **351-352** of the first OS **100** without modification. In another example, when the format of messages **140** from the processes of the second OS **160** differs from the format of the messages **140,** the proxy process may convert the messages **140** from the processes of the second OS **160** into the format of the messages **140.**

When a second process, such as the security domain **315** in the guest OS **310,** accesses the process **351** of the first OS **100,** the security domain **315** receives a process descriptor **351** and sends a message **140** to the proxy process **341** via the communication channel **170** (remote call to call()). The security domain **315** then transitions to a sleep state until the reply() message is received from the proxy process **341.** The proxy process **341,** having received the specified message, converts the received specified message into the message **140** and sends the message **140** to the process **351** using a system call of the OS kernel **100.** The delivery of the message **140** is then monitored by the security monitor **120** using the security policies assigned to the proxy process **341** and the process **351.** Messages **140** from the process **351** to the security domain **315** are sent in a similar way using the proxy process **341** under the control of the security monitor **120.** After receiving the message **140,** the security domain **315** wakes up from the sleep state and terminates the invocation of call().

It is worth noting that this communication is carried out via the programming interfaces of the security domain **315** and the corresponding software interface of the proxy process **341.** The programming interface of security domain **315** receives a set of descriptors required for exchanging messages **140.** The values of set of descriptors required for exchanging messages **140** correspond to the descriptors of the proxy process **341.** The execution thread of the security domain **315** uses the recv() call on the specified interface to the proxy process **341,** after which the specified execution thread transitions to the sleep mode. A recv() call by the execution thread of the security domain **315** leads to a system call recv() by the kernel of the first OS **110,** which initiates the proxy process **341.** The proxy process **341** then also goes into the sleep mode. After the proxy process **341** receives the call to call() from the security domain **315** (for example, from another execution thread), the proxy process **341** wakes up from the sleep state, and the security domain **315** sends the data received earlier during the recv() call via the corresponding programming interface. The security domain **315** also wakes up from the sleep state and receives the data received in the recv() call from the proxy process **341.** The security domain **315** handles the call in the same thread that performed the recv() call and sends the data using the reply() call. The proxy process **341,** after receiving this data, sends the received data to the security domain **315.** To conduct multithreaded exchange of messages **140** between the second process (security domain **315**) and the proxy process **341,** a service thread of the proxy process is created for each thread of the second process.

In one example, the proxy-process interface may include the following calls:

- method(): designed to obtain a thread identifier, a descriptor of the shared memory range and an offset within the limits of this descriptor; the processing of this method is performed in a separate thread of the proxy process; and
- event(): designed to wait for events and return event descriptors; processing of this method is performed by a separate thread of the proxy process, wherein the aforementioned events include answering responses to the calls to call() and receiving requests from the processes of the second OS **160** while waiting in the sleep state for a recv() call.

The event descriptors contain information about the event, including the type of event (call(), recv()), the identifier of the proxy process thread in which the event occurred, the descriptor of the shared memory range in which the data was received, and so on. If there are no items in the event buffer, the wait for the event takes place in the event() call. If the event buffer contains elements, the event() call returns the descriptor from the specified buffer.

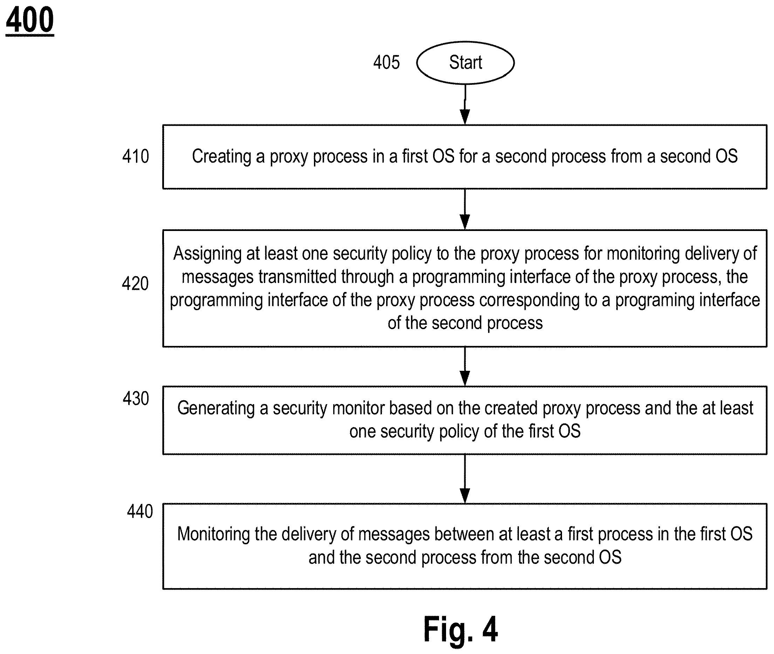

**Fig. 4** illustrates a method **400** for monitoring delivery of messages **140** passed between first and second processes. For example, method **400** may monitor delivery of messages between the first process **134** and the second process **161.** Method **400** starts in step **405** and proceeds to step **410.**

In step **410,** using the process creation tool **280** for the second process **161,** method **400** creates a proxy process **135** in a first OS **100** for a second process, wherein the second process is from a second OS. For example, the created proxy process **135** is designed to exchange messages **140** with a second process **161** on the second OS **160.** In one example, the created proxy process **135** has a programming interface corresponding to a programming interface of the second process **161.**

In step **420,** using the policy assignment tool **290,** method **400** assigns at least one security policy to the created proxy process **135** for monitoring delivery of messages **140** associated with the created proxy process **135,** where the messages **140** are transmitted through the programming interface corresponding to a programming interface of the second process **161.**

In step **430,** for the first OS **100,** method **400** generates a security monitor **120** based on the created proxy process **135** and the security policies of the first OS **100.** The security requirements are expressed in the assigned security policies which are obtained from a policy database **121.** Thus, the security monitor **120** is based on features of the OS architecture **240,** which include at least the created proxy process **135** and the security requirements of the first OS **100.**

In step **440,** by the generated security monitor **120,** method **400** monitors the delivery of messages **140** between at least the first process **134** and the second process **161,** wherein the monitoring of the delivery of messages **140** associated with the proxy process **135** is based on the security policies obtained from the policy database **121.** It is worth noting that the particular aspects disclosed above also apply to the method shown in **Fig. 4.**

**Fig. 5** is a block diagram illustrating a computer system 20 on which examples of systems and methods for monitoring delivery of messages passed between first and second processes may be implemented. The computer system 20 can be in the form of multiple computing devices, or in the form of a single computing device, for example, a desktop computer, a notebook computer, a laptop computer, a mobile computing device, a smart phone, a tablet computer, a server, a mainframe, an embedded device, and other forms of computing devices.

As shown, the computer system 20 includes a central processing unit (CPU) 21, a system memory 22, and a system bus 23 connecting the various system components, including the memory associated with the central processing unit 21. The system bus 23 may comprise a bus memory or bus memory controller, a peripheral bus, and a local bus that is able to interact with any other bus architecture. Examples of the buses may include PCI, ISA, PCI-Express, HyperTransport™, InfiniBand™, Serial ATA, I$^2$C, and other suitable interconnects. The central processing unit 21 (also referred to as a processor) can include a single or multiple sets of processors having single or multiple cores. The processor 21 may execute one or more computer-executable code implementing the techniques of the present disclosure. The system memory 22 may be any memory for storing data used herein and/or computer programs that are executable by the processor 21. The system memory 22 may include volatile memory such as a random access memory (RAM) 25 and non-volatile memory such as a read only memory (ROM) 24, flash memory, etc., or any combination thereof. The basic input/output system (BIOS) 26 may store the basic procedures for transfer of information between elements of the computer system 20, such as those at the time of loading the operating system with the use of the ROM 24.

The computer system 20 may include one or more storage devices such as one or more removable storage devices 27, one or more non-removable storage devices 28, or a combination thereof. The one or more removable storage devices 27 and non-removable storage devices 28 are connected to the system bus 23 via a storage interface 32. In an example, the storage devices and the corresponding computer-readable storage media are power-independent modules for the storage of computer instructions, data structures, program modules, and other data of the computer system 20. The system memory 22, removable storage devices 27, and non-removable storage devices 28 may use a variety of computer-readable storage media. Examples of computer-readable storage media include machine memory such as cache, SRAM, DRAM, zero capacitor RAM, twin transistor RAM, eDRAM, EDO RAM, DDR RAM, EEPROM, NRAM, RRAM, SONOS, PRAM; flash memory or other memory technology such as in solid state drives (SSDs) or flash drives; magnetic cassettes, magnetic tape, and magnetic disk storage such as in hard disk drives or floppy disks; optical storage such as in compact disks (CD-ROM) or digital versatile disks (DVDs); and any other medium which may be used to store the desired data and which can be accessed by the computer system 20.

The system memory 22, removable storage devices 27, and non-removable storage devices 28 of the computer system 20 may be used to store an operating system 35, additional program applications 37, other program modules 38, and program data 39. The computer system 20 may include a peripheral interface 46 for communicating data from input devices 40, such as a keyboard, mouse, stylus, game controller, voice input device, touch input device, or other peripheral devices, such as a printer or scanner via one or more I/O ports, such as a serial port, a parallel port, a universal serial bus (USB), or other peripheral interface. A display device 47 such as one or more monitors, projectors, or integrated display, may also be connected to the system bus 23 across an output interface 48, such as a video adapter. In addition to the display devices 47, the computer system 20 may be equipped with other peripheral output devices (not shown), such as loudspeakers and other audiovisual devices.

The computer system 20 may operate in a network environment, using a network connection to one or more remote computers 49. The remote computer (or computers) 49 may be local computer workstations or servers comprising most or all of the aforementioned elements in describing the nature of a computer system 20. Other devices may also be present in the computer network, such as, but not limited to, routers, network stations, peer devices or other network nodes. The computer system 20 may include one or more network interfaces 51 or network adapters for communicating with the remote computers 49 via one or more networks such as a local-area computer network (LAN) 50, a wide-area computer network (WAN), an intranet, and the Internet. Examples of the network interface 51 may include an Ethernet interface, a Frame Relay interface, SONET interface, and wireless interfaces.

Aspects of the present disclosure may be a system, a method, and/or a computer program product. The computer program product may include a computer readable storage medium (or media) having computer readable program instructions thereon for causing a processor to carry out aspects of the present disclosure.

The computer readable storage medium can be a tangible device that can retain and store program code in the form of instructions or data structures that can be accessed by a processor of a computing device, such as the computing system 20. The computer readable storage medium may be an electronic storage device, a magnetic storage device, an optical storage device, an electromagnetic storage device, a semiconductor storage device, or any suitable combination thereof. By way of example, such computer-readable storage medium can comprise a random access memory (RAM), a read-only memory (ROM), EEPROM, a portable compact disc read-only memory (CD-ROM), a digital versatile disk (DVD), flash memory, a hard disk, a portable computer diskette, a memory stick, a floppy disk, or even a mechanically encoded device such as punch-cards or raised structures in a groove having instructions recorded thereon. As used herein, a computer readable storage medium is not to be construed as being transitory signals per se, such as radio waves or other freely propagating electromagnetic waves, electromagnetic waves propagating through a waveguide or transmission media, or electrical signals transmitted through a wire.

Computer readable program instructions described herein can be downloaded to respective computing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network interface in each computing device receives computer readable program instructions from the network and forwards the computer readable program instructions for storage in a computer readable storage medium within the respective computing device.

Computer readable program instructions for carrying out operations of the present disclosure may be assembly instructions, instruction-set-architecture (ISA) instructions, machine instructions, machine dependent instructions, microcode, firmware instructions, state-setting data, or either source code or object code written in any combination of one or more programming languages, including an object oriented programming language, and conventional procedural programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or WAN, or the connection may be made to an external computer (for example, through the Internet). In some examples, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present disclosure.

In various examples, the systems and methods described in the present disclosure can be addressed in terms of modules. The term "module" as used herein refers to a real-world device, component, or arrangement of components implemented using hardware, such as by an application specific integrated circuit (ASIC) or FPGA, for example, or as a combination of hardware and software, such as by a microprocessor system and a set of instructions to implement the module's functionality, which (while being executed) transform the microprocessor system into a special-purpose device. A module may also be implemented as a combination of the two, with certain functions facilitated by hardware alone, and other functions facilitated by a combination of hardware and software. In certain implementations, at least a portion, and in some cases, all, of a module may be executed on the processor of a computer system (such as the one described in greater detail in **Fig. 5,** above). Accordingly, each module may be realized in a variety of suitable configurations, and should not be limited to any particular implementation exemplified herein.

In the interest of clarity, not all of the routine features of the aspects are disclosed herein. It would be appreciated that in the development of any actual implementation of the present disclosure, numerous implementation-specific decisions must be made in order to achieve the developer's specific goals, and these specific goals will vary for different implementations and different developers. It is understood that such a development effort might be complex and time-consuming, but would nevertheless be a routine undertaking of engineering for those of ordinary skill in the art, having the benefit of this disclosure.

Furthermore, it is to be understood that the phraseology or terminology used herein is for the purpose of description and not of restriction, such that the terminology or phraseology of the present specification is to be interpreted by the skilled in the art in light of the teachings and guidance presented herein, in combination with the knowledge of those skilled in the relevant art(s). Moreover, it is not intended for any term in the specification or claims to be ascribed an uncommon or special meaning unless explicitly set forth as such.

The various aspects disclosed herein encompass present and future known equivalents to the known modules referred to herein by way of illustration. Moreover, while aspects and applications have been shown and described, it would be apparent to those skilled in the art having the benefit of this disclosure that many more modifications than mentioned above are possible without departing from the inventive concepts disclosed herein.

**Claims**

**1.** A computer implemented method (400) for monitoring delivery of messages passed between processes from different operating systems, the method comprising:

creating (410) a proxy process in a first Operating System (OS) for a second process, wherein the second process is from a second OS, the first and second OS being installed in respective computing environments;

assigning (420) at least one security policy to the created proxy process for monitoring delivery of messages associated with the created proxy process, where the messages are transmitted through a programming interface of the created proxy process corresponding to a programming interface of the second process;

generating (430) a security monitor for the first OS based on the created proxy process and security policies of the first OS,

wherein the security monitor is generated by creating a code for the security monitor, the created code including at least one of: a source code, an intermediate code, and an executable code; and

monitoring (440) the delivery of messages between at least a first process in the first OS and the second process, wherein the monitoring of the delivery of messages associated with the proxy process is based on the security policies.

2. The method according to claim 1, wherein the monitoring of the delivery of messages includes, for each message, at least an authorization or a prohibition of the delivery of the message.

3. The method according to any of claims 1 to 2, wherein the messages comprise at least one of:

a request to launch a process,
a request and a reply for implementing of communication between processes, and
a process request to the security monitor.

4. The method according to any of claims 1 to 3, wherein the second OS comprises at least one of:

a guest OS running on a virtual machine under a control of the first OS on a first computer;
a guest OS running on a virtual machine, the first OS being a second guest OS running on a second virtual machine and connected to the first virtual machine through a hypervisor; and
a second OS on a second computer that is connected to the first computer that is running the first OS over a network.

5. The method according to any of claims 1 to 4, wherein the security monitor is generated for the first OS using a generating tool.

6. The method according to any of claims 1 to 5, wherein the security monitor is generated based on features of an architecture of the first OS, the features including at least the created proxy process and the security policies assigned to the proxy process, the security policies being obtained from a security policy database.

7. The method according to any of claims 1 to 6,

wherein, when monitoring the delivery of messages, the security monitor uses the programming interface of the proxy process to determine allowed messages for the proxy process, and
wherein a policy assignment tool is used to additionally specify a list of allowed messages according to the programming interface and to assign a security policy that prohibits the delivery of messages from the proxy process, when the security monitor detects an attempt to deliver messages that are not in the list of allowed messages.

8. The method according to any of claims 1 to 7,

wherein, when monitoring the delivery of messages, the security monitor uses the programming interface of the proxy process to determine a list of processes with which the proxy process is allowed to exchange messages, and
wherein a policy assignment tool is used to additionally assign a security policy that prohibits messages from being exchanged between the proxy process and processes that are not in the list of processes, wherein the list of processes includes at least the first process.

9. The method according to any of claims 1 to 8, wherein the proxy process is created for at least two processes of the second OS when a programming interface for exchanging messages exists between said at least two processes of the second OS.

10. The method according to any of claims 1 to 9, wherein the security policies use a model based on at least one of:

basic operations;
a finite state machine;
a timed automation;
a role-based access control;
a mandatory integrity control;
regular expressions;
discrete events;
object capability model; and
a temporal logic.

11. A system (100) for monitoring delivery of messages passed between processes from different operating systems, comprising:

at least one processor of a first computer configured to:

create (410) a proxy process in a first Operating System (OS) for a second process, wherein the second process is from a second OS, the first OS being installed in the first computer and the second OS being installed in a different computing environment from the first computer;

assign (420) at least one security policy to the created proxy process for monitoring delivery of messages associated with the created proxy process, where the messages are transmitted through a programming interface of the created proxy process corresponding to a programming interface of the second process;

generate (430) a security monitor for the first OS based on the created proxy process and security policies of the first OS,

wherein the security monitor is generated by creating a code for the security monitor, the created code including at least one of: a source code, an intermediate code, and an executable code; and

monitor (440) the delivery of messages between at least a first process in the first OS and the second process, wherein the monitoring of the delivery of messages associated with the proxy process is based on the security policies.

12. The system according to claim 11, wherein the monitoring of the delivery of messages includes, for each message, at least an authorization or a prohibition of the delivery of the message.

13. The system according to any of claims 11 to 12, wherein the messages comprise at least one of:

a request to launch a process,
a request and a reply for implementing of communication between processes, and
a process request to the security monitor.

14. The system according to any of claims 11 to 13, wherein the second OS comprises at least one of:

a guest OS running on a virtual machine under a control of the first OS on a first computer;
a guest OS running on a virtual machine, the first OS being a second guest OS running on a second virtual machine and connected to the first virtual machine through a hypervisor; and
a second OS on a second computer that is connected to the first computer that is running the first OS over a network.

**Patentansprüche**

1. Computerimplementiertes Verfahren (400) zum Überwachen einer Übermittlung von Nachrichten, die zwischen Prozessen von verschiedenen Betriebssystemen weitergeleitet werden, wobei das Verfahren umfasst:

Erzeugen (410) eines Proxy-Prozesses in einem ersten Betriebssystem (OS) für einen zweiten Prozess, wobei der zweite Prozess von einem zweiten OS ist, wobei das erste und das zweite OS in jeweiligen Rechenumgebungen installiert sind;

Zuweisen (420) zumindest einer Sicherheitsrichtlinie zu dem erzeugten Proxy-Prozess zum Überwachen einer Übermittlung von Nachrichten, die mit dem erzeugten Proxy-Prozess verknüpft sind, wo die Nachrichten über eine Programmierschnittstelle des erzeugten Proxy-Prozesses übertragen werden, die einer Programmierschnittstelle des zweiten Prozesses entspricht;

18

Generieren (430) eines Sicherheitsmonitors für das erste OS basierend auf dem erzeugten Proxy-Prozess und Sicherheitsrichtlinien des ersten OS,

wobei der Sicherheitsmonitor durch Erzeugen eines Codes für den Sicherheitsmonitor generiert wird, wobei der erzeugte Code zumindest eines beinhaltet: einen Quellcode, einen Zwischencode und einen ausführbaren Code; und

Überwachen (440) der Übermittlung von Nachrichten zwischen zumindest einem ersten Prozess in dem ersten OS und dem zweiten Prozess, wobei das Überwachen der Übermittlung von Nachrichten, die mit dem Proxy-Prozess verknüpft sind, auf den Sicherheitsrichtlinien basiert.

2. Verfahren nach Anspruch 1, wobei das Überwachen der Übermittlung von Nachrichten für jede Nachricht zumindest eine Autorisierung oder ein Verbot der Übermittlung der Nachricht beinhaltet.

3. Verfahren nach einem der Ansprüche 1 bis 2, wobei die Nachrichten zumindest eines umfassen:

eine Anfrage zum Starten eines Prozesses,
eine Anfrage und eine Antwort zum Implementieren einer Kommunikation zwischen Prozessen und
eine Prozessanfrage an den Sicherheitsmonitor.

4. Verfahren nach einem der Ansprüche 1 bis 3, wobei das zweite OS zumindest eines umfasst:

ein Gast-OS, das auf einer virtuellen Maschine unter einer Kontrolle des ersten OS auf einem ersten Computer läuft;
ein Gast-OS, das auf einer virtuellen Maschine läuft, wobei das erste OS ein zweites Gast-OS ist, das auf einer zweiten virtuellen Maschine läuft und über einen Hypervisor mit der ersten virtuellen Maschine verbunden ist; und
ein zweites OS auf einem zweiten Computer, der über ein Netzwerk mit dem ersten Computer verbunden ist, auf dem das erste OS läuft.

5. Verfahren nach einem der Ansprüche 1 bis 4, wobei der Sicherheitsmonitor für das erste OS unter Verwendung eines Generierungstools generiert wird.

6. Verfahren nach einem der Ansprüche 1 bis 5, wobei der Sicherheitsmonitor basierend auf Merkmalen einer Architektur des ersten OS generiert wird, wobei die Merkmale zumindest den erzeugten Proxy-Prozess und die dem Proxy-Prozess zugewiesenen Sicherheitsrichtlinien beinhaltet, wobei die Sicherheitsrichtlinien aus einer Sicherheitsrichtliniendatenbank erhalten werden.

7. Verfahren nach einem der Ansprüche 1 bis 6,

wobei beim Überwachen der Übermittlung von Nachrichten der Sicherheitsmonitor die Programmierschnittstelle des Proxy-Prozesses nutzt, um zulässige Nachrichten für den Proxy-Prozess zu bestimmen, und
wobei ein Richtlinienzuweisungstool verwendet wird, um zusätzlich eine Liste zulässiger Nachrichten gemäß der Programmierschnittstelle zu spezifizieren und eine Sicherheitsrichtlinie zuzuweisen, welche die Übermittlung von Nachrichten von dem Proxy-Prozess verbietet, wenn der Sicherheitsmonitor einen Versuch erkennt, Nachrichten zu übermitteln, die nicht in der Liste zulässiger Nachrichten sind.

8. Verfahren nach einem der Ansprüche 1 bis 7,

wobei beim Überwachen der Übermittlung von Nachrichten der Sicherheitsmonitor die Programmierschnittstelle des Proxy-Prozesses nutzt, um eine Liste von Prozessen zu bestimmen, mit denen es dem Proxy-Prozess erlaubt ist, Nachrichten auszutauschen, und
wobei ein Richtlinienzuweisungstool verwendet wird, um zusätzlich eine Sicherheitsrichtlinie zuzuweisen, die verbietet, dass Nachrichten zwischen dem Proxy-Prozess und Prozessen ausgetauscht werden, die nicht in der Liste von Nachrichten sind, wobei die Liste von Prozessen zumindest den ersten Prozess beinhaltet.

9. Verfahren nach einem der Ansprüche 1 bis 8, wobei der Proxy-Prozess für zumindest zwei Prozesse des zweiten OS erzeugt wird, wenn eine Programmierschnittstelle zum Austauschen von Nachrichten zwischen den zumindest zwei Prozessen des zweiten OS existiert.

10. Verfahren nach einem der Ansprüche 1 bis 9, wobei die Sicherheitsrichtlinien ein Modell verwenden, das auf zumindest einem basiert:

grundlegenden Operationen;
einer Zustandsmaschine;
einer zeitgesteuerten Automatisierung;
einer rollenbasierten Zugriffskontrolle;
einer obligatorischen Integritätskontrolle;
regulären Ausdrücken;
diskreten Ereignissen;
Objektfähigkeitsmodell; und
einer temporalen Logik.

11. System (100) zum Überwachen einer Übermittlung von Nachrichten, die zwischen Prozessen von verschiedenen Betriebssystemen weitergeleitet werden, umfassend:

zumindest einen Prozessor eines ersten Computers, der konfiguriert ist zum:

Erzeugen (410) eines Proxy-Prozesses in einem ersten Betriebssystem (OS) für einen zweiten Prozess, wobei der zweite Prozess von einem zweiten OS ist, wobei das erste OS in dem ersten Computer installiert ist und das zweite OS in einer von dem ersten Computer unterschiedlichen Rechenumgebung installiert ist; Zuweisen (420) zumindest einer Sicherheitsrichtlinie zu dem erzeugten Proxy-Prozess zum Überwachen einer Übermittlung von Nachrichten, die mit dem erzeugten Proxy-Prozess verknüpft sind, wo die Nachrichten über eine Programmierschnittstelle des erzeugten Proxy-Prozesses übertragen werden, die einer Programmierschnittstelle des zweiten Prozesses entspricht; Generieren (430) eines Sicherheitsmonitors für das erste OS basierend auf dem erzeugten Proxy-Prozess und Sicherheitsrichtlinien des ersten OS, wobei der Sicherheitsmonitor durch Erzeugen eines Codes für den Sicherheitsmonitor generiert wird, wobei der erzeugte Code zumindest eines beinhaltet: einen Quellcode, einen Zwischencode und einen ausführbaren Code; und Überwachen (440) der Übermittlung von Nachrichten zwischen zumindest einem ersten Prozess in dem ersten OS und dem zweiten Prozess, wobei das Überwachen der Übermittlung von Nachrichten, die mit dem Proxy-Prozess verknüpft sind, auf den Sicherheitsrichtlinien basiert.

12. System nach Anspruch 11, wobei das Überwachen der Übermittlung von Nachrichten für jede Nachricht zumindest eine Autorisierung oder ein Verbot der Übermittlung der Nachricht beinhaltet.

13. System nach einem der Ansprüche 11 bis 12, wobei die Nachrichten zumindest eines umfassen:

eine Anfrage zum Starten eines Prozesses,
eine Anfrage und eine Antwort zum Implementieren einer Kommunikation zwischen Prozessen und
eine Prozessanfrage an den Sicherheitsmonitor.

14. System nach einem der Ansprüche 11 bis 13, wobei das zweite OS zumindest eines umfasst:

ein Gast-OS, das auf einer virtuellen Maschine unter einer Kontrolle des ersten OS auf einem ersten Computer läuft;
ein Gast-OS, das auf einer virtuellen Maschine läuft, wobei das erste OS ein zweites Gast-OS ist, das auf einer zweiten virtuellen Maschine läuft und über einen Hypervisor mit der ersten virtuellen Maschine verbunden ist; und
ein zweites OS auf einem zweiten Computer, der über ein Netzwerk mit dem ersten Computer verbunden ist, auf dem das erste OS läuft.

**Revendications**

1. Procédé (400) mis en œuvre par ordinateur pour surveiller la livraison de messages échangés entre des processus de différents systèmes d'exploitation, le procédé comprenant :

la création (410) d'un processus proxy dans un premier système d'exploitation (OS) pour un second processus, le second processus provenant d'un second OS, les premier et second OS étant installés dans des environnements informatiques respectifs ;

l'attribution (420) d'au moins une politique de sécurité au processus proxy créé pour surveiller la livraison de messages associés au processus proxy créé, où les messages sont transmis par le biais d'une interface de programmation du processus proxy créé correspondant à une interface de programmation du second processus ;

la génération (430) d'un moniteur de sécurité pour le premier OS sur la base du processus proxy créé et des politiques de sécurité du premier OS, et

où le moniteur de sécurité est généré en créant un code pour le moniteur de sécurité, le code créé comportant au moins un élément parmi : un code source, un code intermédiaire et un code exécutable ; et

la surveillance (440) de la livraison de messages entre au moins un premier processus dans le premier OS et le second processus, la surveillance de la livraison de messages associés au processus proxy étant basée sur les politiques de sécurité.

2. Procédé selon la revendication 1, dans lequel la surveillance de la livraison de messages comporte, pour chaque message, au moins une autorisation ou une interdiction de la livraison du message.

3. Procédé selon l'une des revendications 1 et 2, dans lequel les messages comprennent au moins une demande parmi :

une demande de lancement d'un processus,
une demande et une réponse pour la mise en œuvre de la communication entre des processus, et
une demande de processus au moniteur de sécurité.

4. Procédé selon l'une des revendications 1 à 3, dans lequel le second OS comprend au moins un élément parmi :

un OS hôte s'exécutant sur une machine virtuelle sous le contrôle du premier OS sur un premier ordinateur ;
un OS hôte s'exécutant sur une machine virtuelle, le premier OS étant un second OS hôte s'exécutant sur une seconde machine virtuelle et connecté à la première machine virtuelle par le biais d'un hyperviseur ; et
un second OS sur un second ordinateur qui est connecté au premier ordinateur qui exécute le premier OS sur un réseau.

5. Procédé selon l'une des revendications 1 à 4, dans lequel le moniteur de sécurité est généré pour le premier OS à l'aide d'un outil de génération.

6. Procédé selon l'une des revendications 1 à 5, dans lequel le moniteur de sécurité est généré sur la base de caractéristiques d'une architecture du premier OS, les caractéristiques comportant au moins le processus proxy créé et les politiques de sécurité attribuées au processus proxy, les politiques de sécurité étant obtenues à partir d'une base de données de politiques de sécurité.

7. Procédé selon l'une des revendications 1 à 6,

dans lequel, lors de la surveillance de la livraison de messages, le moniteur de sécurité utilise l'interface de programmation du processus proxy pour déterminer des messages autorisés pour le processus proxy, et
dans lequel un outil d'attribution de politique est utilisé pour spécifier en outre une liste de messages autorisés selon l'interface de programmation et pour attribuer une politique de sécurité qui interdit la livraison de messages à partir du processus proxy, lorsque le moniteur de sécurité détecte une tentative de livraison de messages qui ne figurent pas dans la liste de messages autorisés.

8. Procédé selon l'une des revendications 1 à 7,

dans lequel, lors de la surveillance de la livraison de messages, le moniteur de sécurité utilise l'interface de programmation du processus proxy pour déterminer une liste de processus avec lesquels le processus proxy est autorisé à échanger des messages, et
dans lequel un outil d'attribution de politique est utilisé pour attribuer en outre une politique de sécurité qui interdit l'échange de messages entre le processus proxy et des processus qui ne figurent pas dans la liste de processus, la liste de processus incluant au moins le premier processus.

9. Procédé selon l'une des revendications 1 à 8, dans lequel le processus proxy est créé pour au moins deux processus du second OS lorsqu'existe une interface de programmation permettant l'échange de messages entre lesdits processus, au moins au nombre de deux, du second OS.

10. Procédé selon l'une des revendications 1 à 9, dans lequel les politiques de sécurité utilisent un modèle basé sur au moins l'un des éléments suivants :

des opérations de base ;
une machine à états finis ;
une automatisation temporisée ;
un contrôle d'accès basé sur les rôles ;
un contrôle d'intégrité obligatoire ;
des expressions régulières ;
des événements discrets ;
un modèle de capacité d'objet ; et
une logique temporelle.

11. Système (100) de surveillance de la livraison de messages échangés entre des processus de différents systèmes d'exploitation, comprenant :
au moins un processeur d'un premier ordinateur configuré pour :

créer (410) un processus proxy dans un premier système d'exploitation (OS) pour un second processus, le second processus provenant d'un second OS, le premier OS étant installé dans le premier ordinateur et le second OS étant installé dans un environnement informatique différent du premier ordinateur ;
attribuer (420) au moins une politique de sécurité au processus proxy créé pour surveiller la livraison de messages associés au processus proxy créé, les messages étant transmis par le biais d'une interface de programmation du processus proxy créé correspondant à une interface de programmation du second processus ;
générer (430) un moniteur de sécurité pour le premier OS sur la base du processus proxy créé et de politiques de sécurité du premier OS,
où le moniteur de sécurité est généré en créant un code pour le moniteur de sécurité, le code créé comportant au moins un code parmi : un code source, un code intermédiaire et un code exécutable ; et
surveiller (440) la livraison de messages entre au moins un premier processus dans le premier OS et le second processus, la surveillance de la livraison de messages associés au processus proxy étant basée sur les politiques de sécurité.

12. Système selon la revendication 11, dans lequel la surveillance de la livraison de messages comporte, pour chaque message, au moins une autorisation ou une interdiction de la livraison du message.

13. Système selon l'une des revendications 11 à 12, dans lequel les messages comprennent au moins une demande parmi :

une demande de lancement d'un processus,
une demande et une réponse pour la mise en œuvre de la communication entre des processus,
et une demande de processus au moniteur de sécurité.

14. Système selon l'une des revendications 11 à 13, dans lequel le second OS comprend au moins un élément parmi :

un OS hôte s'exécutant sur une machine virtuelle sous le contrôle du premier OS sur un premier ordinateur ;
un OS hôte s'exécutant sur une machine virtuelle, le premier OS étant un second OS hôte s'exécutant sur une seconde machine virtuelle et connecté à la première machine virtuelle par le biais d'un hyperviseur ; et
un second OS sur un second ordinateur qui est connecté au premier ordinateur qui exécute le premier OS sur un réseau.

**Fig. 1a**

Operating system 100

Messages 140

Process 1 (131)

Audit service (133)

Process 2 (132)

OS kernel 110

Decision 150

Launch 141

Request 142

Reply 143

Security request 144

Security monitor 120

Policy database 121

Security monitor context 122

EP 4 145 318 B1

EP 4 145 318 B1

Fig. 1b

Process 1 (131)

1. Sending
request 142

OS kernel 110

Process 2 (132)

4. Error notification

2. Transfer of request 142
for verification

3. Decision 150
"prohibited"

Security monitor 120

**Fig. 1c**

First OS 100

Second OS 160

Second process 161

Communication channel 170

First process (134)

Audit service (133)

Process 2 (132)

OS kernel 110

Launch 141

Request 142

Reply 143

Security request 144

Decision 150

Security monitor 120

Security monitor context 122

Policy database 121

Fig. 1d

**Fig. 1e**

**Fig. 2a**

Message delivery monitoring system 201

Security monitor generating system 200

Verification module 221 — (P1) ... (PN)

Configuration tools 220 — (H1) ... (HN)

Development tools 250 → Policy database 121 → Generating tool 210 → Security monitor 120 ⇢ First operating system 100

Components of first OS 261 → First operating system 100 ⇢ First OS image 271

Policy assignment tool 290 ← Architecture of first OS 241

Process creation tool 280 → Architecture of first OS 241

**Fig. 2b**

EP 4 145 318 B1

Fig. 3a

Fig. 3b

**400**

EP 4 145 318 B1

405 — Start

410 — Creating a proxy process in a first OS for a second process from a second OS

420 — Assigning at least one security policy to the proxy process for monitoring delivery of messages transmitted through a programming interface of the proxy process, the programming interface of the proxy process corresponding to a programing interface of the second process

430 — Generating a security monitor based on the created proxy process and the at least one security policy of the first OS

440 — Monitoring the delivery of messages between at least a first process in the first OS and the second process from the second OS

Fig. 4

Fig. 5